# EUROPÄISCHE PATENTSCHRIFT

(11) **EP 1 287 268 B1**
(45) Veröffentlichungstag und Bekanntmachung des Hinweises auf die Patenterteilung: **05.11.2008**
(21) Anmeldenummer: 02735161.8
(22) Anmeldetag: 22.03.2002
(51) Int. Cl.: F16D 33/18

(54) **HYDRODYNAMISCHE KUPPLUNG**
HYDRODYNAMIC COUPLING
ACCOUPLEMENT HYDRODYNAMIQUE

(30) Priorität: 28.03.2001 DE 10115561
(43) Veröffentlichungstag der Anmeldung: 05.03.2003
(73) Patentinhaber: Voith Turbo GmbH & Co. KG, 89522 Heidenheim (DE)
(72) Erfinder: OBSER, Stephan, 74589 Satteldorf (DE); ADLEFF, Kurt, 74564 Crailsheim (DE)
(74) Vertreter: Dr. Weitzel & Partner
(86) Internationale Anmeldenummer: PCT/EP2002/003246
(87) Internationale Veröffentlichungsnummer: WO 2002/077482

(56) Entgegenhaltungen:
- DE-C- 244 279
- US-A- 3 237 409
- PATENT ABSTRACTS OF JAPAN vol. 006, no. 228 (M-171), 13. November 1982 (1982-11-13) & JP 57 129931 A (HITACHI SEISAKUSHO KK), 12. August 1982 (1982-08-12)

## Beschreibung

Die Erfindung betrifft eine hydrodynamische Kupplung, im einzelnen mit den Merkmalen aus dem Oberbegriff des Anspruchs 1, wie beispielsweise in der US 3 237 409 beschrieben ist.

Hydrodynamische Kupplungen sind in verschiedenen Ausführungen aus einer Vielzahl von Druckschriften bekannt. Stellvertretend wird auf den Voith-Druck Nr. CR 277d 5.00 1000 verwiesen. Dieser offenbart eine hydrodynamische Kupplung mit integrierter Ölversorgungsantage. Diese umfaßt ein als Pumpenrad fungierendes Primärrad und ein Sekundärrad, wobei dem Primärrad eine sogenannte Schale zugeordnet ist, die drehfest mit diesem verbunden ist und das Sekundärrad in axialer und wenigstens über einen Teil der radialen Erstreckung umschließt. Die Schale weist im Bereich ihres Außenumfanges, insbesondere im Bereich der radial äußeren Abmessungen Durchtrittsöffnungen auf, welche einen Übertritt von Betriebsmittel aus der Schale in eine drehfest mit dieser Schale gekoppelte weitere Auffangschale ermöglichen, aus welcher das Betriebsmittel mittels einer Staudruckpumpe in einem geschlossenen Kreislauf während des Betriebes der hydrodynamischen Kupplung geführt wird. Für den Fall der Abschaltung der hydrodynamischen Kupplung erfolgt aufgrund der Anordnung der Durchtrittsöffnungen in der Schale unter Fliehkrafteinwirkung eine Entleerung des torusförmigen Arbeitsraumes sowie dadurch bedingt des durch die Schale begrenzten Zwischenraumes. Die dabei erzielte vollständige Entleerung ist jedoch nicht in jedem Fall gewünscht, insbesondere bei Anwendungsfällen, die durch häufig wechselnde Füll- und Entleervorgänge beziehungsweise einen sehr schnellen Füllvorgang zur Gewährleistung einer raschen Momentübertragung erfordern.

Der Erfindung liegt daher die Aufgabe zugrunde, eine hydrodynamische Kupplung der eingangs genannten Art mit geringem konstruktiven und fertigungstechnischen Aufwand derart weiterzuentwickeln, daß während des Betriebes die Füllung über Zulauf aufrecht erhalten wird, während der Ablauf über die Düsen sichergestellt ist und daß während des Stillstandes der Kupplung eine Teilfüllung sichergestellt ist.
Dadurch kann
- die Füllversorung bei gewünschter schneller Inbetriebnahme verkürzt werden, und/oder
- in jedem Betriebszustand der hydrodynamischen Kupplung die Kraftübertragung zwischen den Läuferteilen sichergestellt werden.

Die erfindungsgemäße Lösung ist durch die Merkmale des Anspruchs 1 charakterisiert. Vorteilhafte Ausgestaltungen sind in den Unteransprüchen wiedergegeben.

Die hydrodynamische Kupplung umfaßt ein Primärrad und ein Sekundärrad, die miteinander einen torusförmigen Arbeitsraum bilden. Mit dem Primärrad ist eine Schale, welche nachfolgend als erste Schale bezeichnet wird, drehfest verbunden, die das Sekundärrad in axialer Richtung und zumindest über einen Teil der radialen Erstreckung unter Bildung eines Zwischenraumes umschließt. Die Schale weist mindestens eine Durchtrittsöffnung auf, welche im radial äußeren Bereich der Schale angeordnet ist. Erfindungsgemäß ist mit der Schale und/oder dem Primärrad eine weitere zweite Schale gekoppelt, welche einen zweiten Zwischenraum bildet, der über die Durchtrittsöffnungen in der ersten Schale mit dem ersten Zwischenraum verbunden ist. Die zweite Schale weist im radial äußeren Bereich ebenfalls mindestens eine Durchtrittsöffnung auf, welche den zweiten Zwischenraum mit der Umgebung oder dem von einem Gehäuse gebildeten Innenraum einer hydrodynamischen Kupplung oder bei Einbau in einer Antriebseinrichtng deren Gehäuse verbindet. Erfindungsgemäß sind des weiteren die Durchtrittsöffnungen an der ersten Schale und der zweiten Schale in Umfangsrichtung betrachtet zueinander versetzt angeordnet, so daß das Betriebsmittel nach Austritt in die erste Schale nicht sofort an die Umgebung abgeschleudert wird, sondern einen gewissen Strömungsweg im zweiten Zwischenraum zurücklegen muß, ehe dieses gänzlich aus der hydrodynamischen Kupplung austritt.

Gemäß einer besonders vorteilhaften Ausgestaltung sind die Durchtrittsöffnungen an der ersten Schale gegenüber der zweiten Schale zueinander in Umfangsrichtung um 180 Grad verdreht. Die Durchtrittsöffnungen liegen dabei in radialer Richtung ausgehend von der Rotationsachse betrachtet entweder auf dem gleichen Radius oder die Durchtrittsöffnung an der zweiten Schale liegt auf einem größeren Radius als die an der ersten Schale. Aufgrund ihrerer räumlichen Zuordnung zueinander kann man bei der ersten Schale auch von innerer Schale und der zweiten Schale von äußerer Schale sprechen.

Die erfindungsgemäße Lösung ermöglicht es, das auch während des Stillstandes beziehungsweise noch beim Entleervorgang der hydrodynamischen Kupplung aufgrund der fordelichen Zwangsführung in de zweiten, d.h. äußeren Schale, bis zum Austritt immer eine bestimmte Füllmenge in der hydrodynamischen Kupplung verbleibt. Diese Teilfüllung im Stillstand bietet den Vorteil, daß bei Wiederinbetriebnahme der hydrodynamischen Kupplung bereits ein bestimmter Betriebsmittelvorrat zur Verfügung steht, der nicht erst über das Betriebsmittelversorgungssystem bereitgestellt werden muß, was zu einer zeitlichen Verzögerung bei der Befüllung führen kann. Insbesondere für Anwendungsfälle, die hier durch einen schnellen Wechsel zwischen Betriebnahme und Außerbetriebnahme der hydrodynamischen Kupplung charakterisiert sind, bietet diese Lösung einen erheblichen Vorteil die aufgrund des Betriebsmittels der Inbetriebnahme entgegenstehenden Kräfte vernachlässigbar gering sind. Auf spezielle Füllpumpen, insbesondere mit hoher Förderleistung kann dabei verzichtet werden.

Bezüglich der konkreten Ausführung der zweiten, d.h. äußeren Schale und damit der Zuordnung des Zwischenraumes zur ersten, d.h. inneren Schale beziehungsweise dem ersten durch die innere Schale gebildeten Zwischenraum bestehen mehrere Möglichkeiten. Entsprechend den zur Verfügung stehenden Bauraumgegebenheiten werden dabei Lösungen mit
a) Anordnung des zweiten durch die zweite bzw. äußere Schale gebildeten Zwischenraumes in axialer Richtung neben dem ersten durch die erste bzw. innere Schale gebildeten Zwischenraum oder
b) Anordnung des zweiten äußeren Zwischenraumes in radialer Richtung außerhalb, das heißt, den ersten Zwischenraum in radialer Richtung umschließend.

Im erstgenannten Fall erstreckt sich dabei der Zwischenraum vorzugsweise in radialer Richtung bis in den Bereich der radialen Erstreckung des ersten Zwischenraumes, das heißt, es ist keine Abstufung zwischen der ersten und der zweiten Schale, welche nebeneinander angeordnet sind, vorhanden. Im zweiten Fall wird vorzugsweise eine Erstreckung des zweiten Zwischenraumes in axialer Richtung in einer Größenordnung, die der maximalen Erstreckung des ersten Zwischenraumes in axialer Richtung entspricht, angestrebt. Mit diesen beiden Lösungen kann eine hinsichtlich der möglichen Ventilationsverluste optimale Kupplungsgestaltung herausgearbeitet werden. Denkbar ist es jedoch auch, eine Kombination beider Möglichkeiten zu realisieren, das heißt der zweite äußere Zwischenraum umschließt quasi den ersten Zwischenraum sowohl in axialer als auch radialer Richtung, wobei beide durch die Wandung der ersten inneren Schale getrennt sind.

Die Durchtrittssöffnungen sind im einfachsten Fall als Durchgangsbohrungen ausgeführt. Diese können jedoch auch entsprechend gewünschter zusätzlicher Effekte mit Querschnittsveränderungen versehen werden. Dies filt auch für die Ausrichtung der Durchtrittsöffnungen. Diese können radial ausgerichtet sein oder in einem Winkel zu einer Senkrechten zur Rotationsachse.

Bezüglich der konkreten konstruktiven Ausgestaltung, insbesondere Anbindung der zweiten äußeren Kupplungsschale an die erste innere Kupplungsschale beziehungsweise das Primärrad bestehen eine Vielzahl von Möglichkeiten, welche jedoch im normalen Tätigkeitsbereich des zuständigen Fachmannes liegen. Der äußere zweite Zwischenraum ist dabei entsprechend der Ausgestaltung der zweiten Schale als Ringraum oder ringförmiger Kanal vorliegend.

Die erfindungsgemäße Lösung wird nachfolgend anhand von Figuren erläutert. Darin ist im einzelnen folgendes dargestellt:
- Figur 1: verdeutlicht in schematisch stark vereinfachter Darstellung eine erste Ausührung einer erfindungsgemäß gestalteten hydrodynamischen Kupplung mit axial nebeneinander angeordneten Zwischenräumen;
- Figur 2: verdeutlicht in schematisch stark vereinfachter Darstellung eine erste Ausührung einer erfindungsgemäß gestalteten hydrodynamischen Kupplung mit radial übereinander angeordneten Zwischenräumen;
- Figur 3: verdeutlicht eine Ausführung mit Erstreckung des zweiten Zwischenraumes in axialer und radialer Richtung;
- Figur 4: verdeutlicht anhand einer vereinfachten Darstellung eines senkrechten Schnittes zur Axialschnittebene die Anordnung der einzelnen Durchtrittsöffnungen.

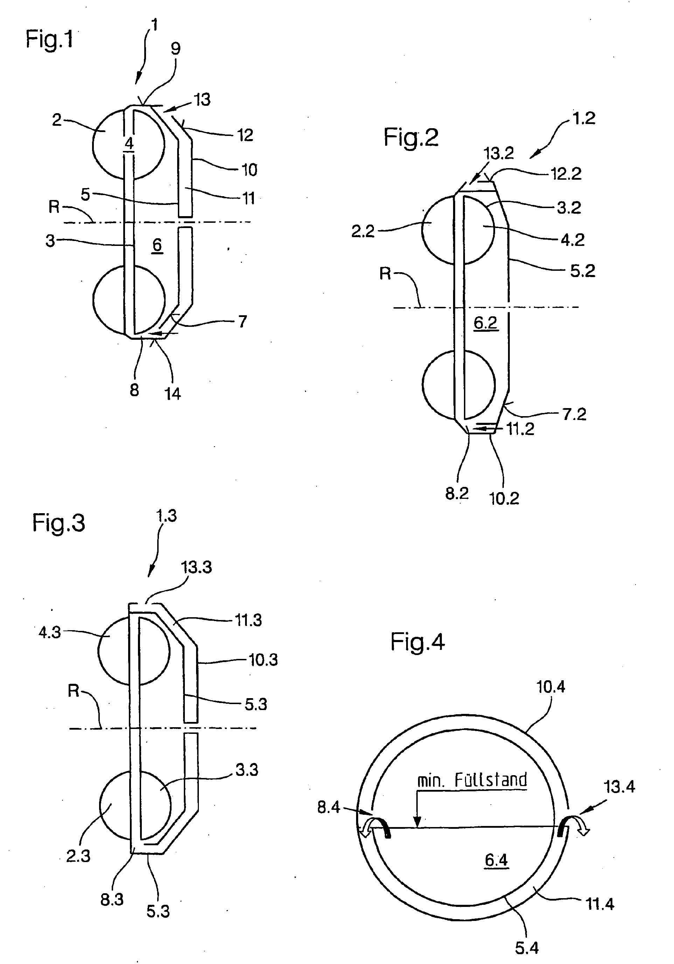

Figur 1 verdeutlicht in schematisch stark vereinfachter Darstellung eine erfindungsgemäß gestaltete hydrodynamische Kupplung 1 im Axialschnitt. Diese umfaßt ein, im Traktionsbetrieb als Pumpenrad fungierendes Primärrad 2 und ein als Turbinenrad fungierendes Sekundärrad 3, die miteinander einen torusförmigen Arbeitsraum 4 bilden. Dem Primärrad 2 ist eine Schale 5 zugeordnet, welche drehfest mit dem Primärrad 2 verbunden ist und das Sekundärrad 3 unter Bildung eines ersten Zwischenraumes 6 in axialer Richtung und wenigstens teilweise in radialer Richtung umschließt. Im Bereich des Außenumfanges 7 der Schale 6 ist mindestens eine Durchtrittsöffnung 8 vorgesehen, welche einen Übertritt von im ersten Zwischenraum 6 befindlichem Betriebsmittel aus der Schale 5 heraus ermöglicht. Die Durchtrittsöffnung 8 ist dabei im radial äußeren Bereich 9 der Schale 5 angeordnet. Der erste Zwischenraum 6, welcher durch die Schale 5 begrenzt wird, erstreckt sich dabei sowohl in radialer als auch axialer Richtung. Erfindungsgemäß ist eine weitere zweite Schale 10 vorgesehen, welche der ersten Schale 5 unter Bildung eines weiteren zweiten Zwischenraumes 11 zugeordnet ist. Die zweite Schale 10 ist dabei drehfest entweder direkt mit der ersten Schale 5 oder aber dem Primärrad 2 unmittelbar drehfest verbunden. Die zweite Schale 10 ist bei der Ausführung gemäß Figur 1 in axialer Richtung der ersten Schale 5 zugeordnet, so daß der zweite Zwischenraum 11 sich sowohl in axialer als auch radialer Richtung erstreckt. Dabei ist wie in der Figur 1 dargestellt die zweite Schale 10 neben der ersten Schale 5 angeordnet, wobei die Durchtrittsöffnung 8 in der ersten Schale den ersten Zwischenraum 6 mit dem zweiten Zwischenraum 11 verbindet. Erfindungsgemäß sind des weiteren zum Austritt von Betriebsmittel aus der zweiten Schale 10 im Bereich von deren Außenumfang 12 mindestens eine Durchtrittsöffnung 13 vorgesehen, wobei die in der zweiten Schale 10 angeordneten Durchtrittsöffnungen 13 in Umfangsrichtung betrachtet bezogen auf die Rotationsachse R versetzt zur Durchtrittsöffnung 8 in der ersten Schale angeordnet sind. Vorzugsweise erfolgt die Anordnung bei Betrachtung der Rotationsachse als Spiegelgerade direkt gegenüber der Durchtrittsöffnung 8 in der ersten Schale 5, das heißt mit einem Versatz von ca. 180 Grad. Die Anordnung der Durchtrittsöffnung 13 erfolgt im radial äußeren Bereich 14 der zweiten Schale 10. Bei der in der Figur 1 dargestellten Ausführung sind die beiden Zwischenräume - erster Zwischenraum 6 und zweiter Zwischenraum 11 - in axialer Richtung nebeneinander angeordnet, wobei eine Trennung über die Wandung der ersten Schale 5 erfolgt.

Figur 2 verdeutlicht eine weitere Ausführung einer erfindungsgemäß gestalteten hydrodynamischen Kupplung 1.2 mit einem Primärrad 2.2 und einem Sekundärrad 3.2, die miteinander einen torusförmigen Arbeitsraum 4.2 bilden. Auch hier ist das Primärrad 2 drehfest mit einer Schale 5.2 gekoppelt, welches einen ersten Zwischenraum 6.2 begrenzt. Der erste Zwischenraum erstreckt sich dabei bezogen auf den torusförmigen Arbeitsraum 4.2 sowohl in radialer Richtung als auch axialer Richtung bezogen auf die Rotationsachse R. Auch hier ist im Bereich des Außenumfanges 7.2, insbesondere dem radial äußeren Bereich 9.2 der Schale 5 eine Durchtrittsöffnung 8.2 vorgesehen. Diese verbindet den ersten Zwischenraum 6.2 mit einem weiteren, von einer zweiten Schale 10.2 umschlossenen Zwischenraum 11.2. Der zweite Zwischenraum 11.2 wird dabei von der zweiten Schale 10.2 begrenzt, welche in radialer Richtung bezogen auf die Rotationsachse R die erste Schale 5.2 umschließt und somit einen ringförmigen Zwischenraum, den Zwischenraum 11.2 bildet. Beide Zwischenräume - erster Zwischenraum 6.2 und zweiter Zwischenraum 11.2 - sind somit in radialer Richtung nebeneinander angeordnet. Ein Übertritt von Betriebsmittel aus dem zweiten Zwischenraum 11.2 an die Umgebung ist über mindestens eine Durchtrittsöffnung 13.2 im Bereich des Außenumfanges 12.2 der zweiten Schale 10.2 möglich. Der Außenumfang 12.2 entspricht dabei dem radial äußeren Bereich 14.2. Auch hier sind die Durchtrittsöffnung 8.2 und die Durchtrittsöffnung 13.2 in Umfangsrichtung betrachtet versetzt zueinander ausgeführt, vorzugsweise in einem Winkel von 180 Grad zueinander.

Figur 3 verdeutlicht eine weitere Ausführung einer erfindungsgemäß gestalteten hydrodynamischen Kupplung 1.3, für welche der zweite Zwischenraum 11.3 sich sowohl in axialer als auch radialer Richtung neben beziehungsweise teilweise um den ersten Zwischenraum 6.2 erstreckt. Auch hier ist die erste Schale 5.2 derart drehfest mit dem Primärrad 2 gekoppelt, daß diese das Sekundärrad 3.3 in axialer und radialer Richtung umschließt. Der zweite Zwischenraum 11.3 wird dabei von einer zweiten Schale 10.3 gebildet, die derart drehfest mit dem Primärrad 2.3 beziehungsweise der ersten Schale 5.3 verbunden ist, daß die erste Schale 5.3 zumindest teilweise in axialer Richtung als auch in radialer Richtung umschlossen wird. Dies bedeutet, daß die Wandung der zweiten Schale 11.3 sich in axialer Richtung neben der ersten Schale 5.3 und in radialer Richtung über die äußeren Abmessungen am Außenumfang der ersten Schale 5.3 erstreckt. Auch hier erfolgt vorzugsweise die Anordnung der Durchtrittsöffnungen 8.3 beziehungsweise 13.3 jeweils im Bereich der radial äußeren Abmessungen, so daß unter dem Einfluß der Fliehkraftwirkung ein optimaler und schneller Transport des gewünschten zu entleerenden Betriebsmittels erfolgen kann.

Bei den in den Figuren 1 und 2 dargestellten Ausführungen ist die Erstreckung des zweiten Zwischenraumes 11 beziehungsweise 11.2 jeweils an die Erstreckungen des ersten Zwischenraumes 6 beziehungsweise 6.2 angepaßt. Bei der Figur 1 bedeutet dies eine Erstreckung in radialer Richtung analog der Erstreckung des ersten Zwischenraumes 6, während in der Figur 2 im wesentlichen die axiale Erstreckung des zweiten Zwischenraumes 11.2 nicht über die axiale Erstreckung des ersten Zwischenraumes 6.2 erfolgt. Zur Vermeidung unnötiger Verluste durch eine gestufte Gestaltung der Außenkontur der hydrodynamischen Kupplung 1 erfolgt dabei vorzugsweise immer eine Anpassung beziehungsweise Auslegung der einzelnen Zwischenräume, daß Stufungen, das heißt starke sprungartige Durchmesseränderungen vermieden werden.

Die Figur 4 verdeutlicht in stark schematisierter Darstellung in einer Schnittebene senkrecht zur Axialschnittebene einer hydrodynamischen Kupplung 1.4 die Anordnung der Durchtrittsöffnungen 8.4 beziehungsweise 13.4 an den einzelnen Schalen 5.4 und 10.4. Daraus wird ersichtlich, daß die beiden Durchtrittsöffnungen 8.4 und 13.4 zueinander um einen Winkel, vorzugsweise 180 Grad in Umfangsrichtung versetzt angeordnet sind. Um einen minimalen Füllstand, hier ist die Füllstandshöhe mit 15 gekennzeichnet, im Stillstand zu erzielen, ist dabei die entsprechende Anordnung der Bohrungen erforderlich. Dabei wird bei Rotation um die Rotationsachse R der torusförmige Arbeitsraum 4.4 vom Betriebsmedium durchströmt, welches aufgrund der Fliehkraft nach außen in die erste Schale 5.4 gelangt, von wo das Betriebsmittel ebenfalls unter Einwirkung der Fliehkraft über die Durchtrittsöffnung 8.4 in den zweiten Zwischenraum 11.4 gelangt und von diesem ebenfalls aufgrund der Fliehkraftwirkung über die Durchtrittsöffnung 13.4 an die Umgebung oder ins Gehäuse abgegeben wird. Die Durchtrittsöffnungen sind dabei vorzugsweise auf gleichem oder die Durchtrittsöffnung in der zweiten Schale ist auf einem größeren Radius als die der ersten Schale angeordnet. Um nicht sofort eine vollständige Entleerung im Stillstand sondern eine Teilbefüllung zu ermöglichen, die unabhängig von der Position der ersten Schale und damit auch der zweiten Schale ist, wird das Betriebsmittel aus der ersten Schale 5.4 über den weiteren Zwischenraum 11.4 geleitet, ehe dies zu einem Übertritt an die Umgebung oder ins Gehäuse kommt.

### Bezugszeichenliste

- 1; 1.2; 1.3: hydrodynamische Kupplung
- 2; 2.2; 2.3: Primärrad
- 3; 3.2; 3.3: Sekundärrad
- 4; 4.2; 4.3: torusförmiger Arbeitsraum
- 5; 5.2; 5.3: Schale
- 6; 6.2; 6.3: erster Zwischenraum
- 7; 7.2; 7.3: Außenumfang der ersten Schale
- 8; 8.2; 8.3: Durchtrittsöffnung
- 9; 9.2; 9.3: radial äußerer Bereich
- 10; 10.2; 10.3: zweite Schale
- 11; 11.2; 11.3: zweiter Zwischenraum
- 12; 12.2; 12.3: Außenumfang
- 13; 13.2; 13.3: Durchtrittsöffnung
- 14; 14.2; 14.3: radial äußerer Bereich
- 15; 15.2; 15.3: Füllstandshöhe
- R: Rotationsachse

## Patentansprüche

1. Hydrodynamische Kupplung (1; 1.2; 1.3);
1.1 mit einem Primärrad (2; 2.2; 2.3) und einem Sekundärrad (3; 3.2; 3.3), die miteinander einen torusförmigen Arbeitsraum (4; 4.2, 4.3) bilden;
1.2 mit einer Schale (5; 5.2; 5.3), die drehfest mit dem Primärrad (2; 2.2; 2.3) verbunden ist und das Sekundärrad (3; 3.2; 3.3) in axialer Richtung und zumindest teilweise in radialer Richtung unter Bildung eines Zwischenraumes (6; 6.2; 6.3) umschließt;
1.3 mit mindestens einer Durchtrittsöffnung (8; 8.2; 8.3), die im radial äußeren Bereich (9; 9.2; 9.3) der Schale (5; 5.2; 5.3) angeordnet ist;
1.4 mit einer drehfest mit der Schale (5; 5.2; 5.3) und/oder dem Primärrad (2; 2.2; 2.3) unter Bildung eines weiteren zweiten Zwischenraumes (11; 11.2; 11.3) gekoppelten weiteren zweiten Schale (10; 10.2; 10.3);
1.5 der zweite Zwischenraum (11; 11.2; 11.3) ist mit dem ersten Zwischenraum (6; 6.2; 6.3) über die Durchtrittsöffnung- oder öffnungen (8; 8.2; 8.3) verbunden;
**gekennzeichnet durch** folgende Merkmale:
1.6 mit mindestens einer weiteren Durchtrittsöffnung (13; 13.2; 13.3) im radial äußeren Bereich (14; 14.2; 14.3) der zweiten Schale (10; 10.2; 10.3), wobei die Durchtrittsöffnung oder -öffnungen (8; 8.2; 8.3) in der ersten Schale (5; 5.2; 5.3) und die Durchtrittsöffnung oder -öffnungen (13; 13.2, 13.3) der zweiten Schale (10; 10.2; 10.3) in Umfangsrichtung betrachtet zueinander versetzt angeordnet sind.

2. Hydrodynamische Kupplung (1; 1.2; 1.3) nach Anspruch 1, **dadurch gekennzeichnet, daß** die Durchtrittsöffnung oder -öffnungen (8; 8.2; 8.3) der ersten Schale (5; 5.2; 5.3) und die Durchtrittsöffnung oder -öffnungen (13; 13.2; 13.3) der zweiten Schale (10; 10.2; 10.3) in Umfangsrichtung betrachtet um einen Winkel von 180 Grad zueinander versetzt angeordnet sind.

3. Hydrodynamische Kupplung (1) nach einem der Ansprüche 1 oder 2, **dadurch gekennzeichnet, daß** der zweite Zwischenraum (11) in axialer Richtung neben dem ersten Zwischenraum (6) angeordnet ist.

4. Hydrodynamische Kupplung (1) nach Anspruch 3, **dadurch gekennzeichnet, daß** der zweite Zwischenraum (11) in radialer Richtung eine Erstreckung aufweist, welche gleich oder kleiner der radialen Erstreckung des ersten Zwischenraumes (6) ist.

5. Hydrodynamische Kupplung (1) nach einem der Ansprüche 3 oder 4, **dadurch gekennzeichnet, daß** die Durchtrittsöffnung- oder öffnungen (8) in der ersten Schale (5) und die Durchtrittsöffnung oder -öffnungen (13) in der zweiten Schale (10) bezogen auf die Rotationsachse R jeweils auf Radien oder Durchmessern mit gleichen Abmessungen angeordnet sind.

6. Hydrodynamische Kupplung (1.2) nach einem der Ansprüche 1 oder 2, **dadurch gekennzeichnet, daß** der zweite Zwischenraum (10.2) in radialer Richtung den ersten Zwischenraum (6.2) umschließt.

7. Hydrodynamische Kupplung (1.2) nach Anspruch 6, **dadurch gekennzeichnet, daß** die Erstreckung des zweiten Zwischenraumes (11.2) in axialer Richtung gleich oder geringer als die axiale Erstreckung des ersten Zwischenraumes (6.2) ist.

8. Hydrodynamische Kupplung (1.2) nach einem der Ansprüche 6 oder 7, **dadurch gekennzeichnet, daß** die Durchtrittsöffnung oder -öffnungen (13.2) in der zweiten Schale (10.2) auf einem größeren Durchmesser als die Durchtrittsöffnung- oder öffnungen (8.2) der ersten Schale (5.2) angeordnet sind.

9. Hydrodynamische Kupplung (1.3) nach einem der Ansprüche 1 oder 2, **dadurch gekennzeichnet, daß** der zweite Zwischenraum (11.3) den ersten Zwischenraum (6.3) sowohl in axialer als auch radialer Richtung wenigstens jeweils teilweise umschließt und die Durchtrittsöffnung oder -öffnungen (13.3) in der zweiten Schale (10.3) auf einem Durchmesser liegen, welcher hinsichtlich seiner Abmessungen gleich oder größer dem der Anordnung der Durchtrittsöffnung oder - öffnungen (8.3) in der ersten Schale (5.3) ist.

10. Hydrodynamische Kupplung nach einem der Ansprüche 1 bis 9, **dadurch gekennzeichnet dass**, die Durchtrittsöffnung oder -öffnungen (8; 8.2; 8.3) in der ersten Schale (5; 5.2; 5.3) und die Durchtrittsöffnung oder-öffnungen (13; 13.2; 13.3) der zweiten Schale (10; 10.2; 10.3) in Umfangsrichtung betrachtet um einen Winkel in einem Bereich von 90° bis 270° zueinander versetzt angeordnet sind.

## Claims

1. A hydrodynamic coupling (1; 1.2; 1.3);
1.1. with a primary wheel (2; 2.2; 2.3) and a secondary wheel (3; 3.2; 3.3) which jointly form a toroidal working chamber (4; 4.2, 4.3);
1.2. with a shell (5; 5.2; 5.3) which is connected in a torsionally rigid manner with the primary wheel (2; 2.2; 2.3) and encloses the secondary wheel (3; 3.2; 3.3) in the axial direction and at least partly in the radial direction by forming an intermediate space (6; 6.2; 6.3);
1.3. with at least one pass-through opening (8; 8.2;8.3) which is arranged in the radially outside region (9; 9.2; 9.3) of the shell (5; 5.2; 5.3);
1.4. with a further second shell (10; 10.2; 10.3) which is coupled in a torsionally rigid manner with the shell (5; 5.2; 5.3) and/or the primary wheel (2; 2.2; 2.3) by forming a further second intermediate space (11; 11.2; 11.3);
1.5. the second intermediate space (11; 11.2; 11.3) is connected with the first intermediate space (6; 6.2; 6.3) via the pass-through opening or openings (8; 8.2;8.3);
**characterized by** the following features:
1.6. with at least one further pass-through opening (13; 13.2; 13.3) in the radially outside region (14; 14.2; 14.3) of the second shell (10; 10.2; 10.3), with the pass-through opening or openings (8; 8.2;8.3) in the first shell (5; 5.2; 5.3) and the pass-through opening or openings (13; 13.2;13.3) of the second shell (10; 10.2; 10.3) being arranged in an offset manner with respect to each other when seen in the circumferential direction.

2. A hydrodynamic coupling (1; 1.2; 1.3) according to claim 1, **characterized in that** the pass-through opening or openings (8; 8.2; 8.3) of the first shell (5; 5.2; 5.3) and the pass-through opening or openings (13; 13.2;13.3) of the second shell (10; 10.2; 10.3) are arranged offset with respect to each other by an angle of 180 degrees when seen in the circumferential direction.

3. A hydrodynamic coupling (1) according to one of the claims 1 or 2, **characterized in that** the second intermediate space (11) is arranged in the axial direction adjacent to the first intermediate space (6).

4. A hydrodynamic coupling (1) according to claim 3, **characterized in that** the second intermediate space (11) has an extension in the radial direction which is equal to or smaller than the radial extension of the first intermediate space (6).

5. A hydrodynamic coupling (1) according to one of the claims 3 or 4, **characterized in that** the pass-through opening or openings (8) in the first shell (5) and the pass-through opening or openings (13) in the second shell (10) are each arranged with respect to the rotational axis R on radii or diameters of the same dimensions.

6. A hydrodynamic coupling (1.2) according to one of the claims 1 or 2, **characterized in that** the second intermediate space (10.2) encloses the first intermediate space (6.2) in the radial direction.

7. A hydrodynamic coupling (1.2) according to claim 6, **characterized in that** the extension of the second intermediate space (11.2) in the axial direction is equal to or smaller than the axial extension of the first intermediate space (6.2).

8. A hydrodynamic coupling (1.2) according to one of the claims 6 or 7, **characterized in that** the pass-through opening or openings (13.2) in the second shell (10.2) are arranged on a larger diameter than the pass-through opening or openings (8.2) of the first shell (5.2).

9. A hydrodynamic coupling (1.3) according to one of the claims 1 or 2,
**characterized in that** the second intermediate space (11.3) encloses the first intermediate space (6.3) at least partly both in the axial and radial direction and the pass-through opening or openings (13.3) in the second shell (10.3) lie on a diameter which with respect to its dimensions is equal to or larger than the arrangement of the pass-through opening or openings (8.3) in the first shell (5.3).

10. A hydrodynamic coupling according to one of the claims 1 to 9, **characterized in that** the pass-through opening or openings (8; 8.2; 8.3) in the first shell (5; 5.2; 5.3) and the pass-through opening or openings (13; 13.2; 13.3) of the second shell (10; 10.2; 10.3) are arranged offset to one another by an angle in a range of 90° to 270° when seen in the circumferential direction.

## Revendications

1. Accouplement hydrodynamique (1 ; 1.2 ; 1.3)
1.1 avec une roue primaire (2 ; 2.2 ; 2.3) et une roue secondaire (3 ; 3.2 ; 3.3), formant ensemble un espace de travail toroïdal (4 ; 4.2, 4.3) ;
1.2 avec une enveloppe (5 ; 5.2 ; 5.3), reliée de manière fixe en rotation avec la roue primaire (2 ; 2.2 ; 2.3) et qui entoure la roue secondaire (3 ; 3.2 ; 3.3) dans le sens axial et au moins partiellement dans le sens radial en formant un espace intermédiaire (6 ; 6.2 ; 6.3) ;
1.3 avec au moins une ouverture de passage (8 ; 8.2 ; 8.3), disposée dans la partie extérieure dans le sens radial (9 ; 9.2 ; 9.3) de l'enveloppe (5 ; 5.2 ; 5.3) ;
1.4 avec une autre deuxième enveloppe (10 ; 10.2 ; 10.3) couplée à l'enveloppe (5 ; 5.2 ; 5.3) et/ou à la roue primaire (2 ; 2.2 ; 2.3) en formant un autre deuxième espace intermédiaire (11 ; 11.2 ; 11.3) ;
1.5 dans lequel le deuxième espace intermédiaire (11 ; 11.2 ; 11.3) communique avec le premier espace intermédiaire (6, 6.2 ; 6.3) par la ou les ouvertures de passage (8 ; 8.2 ; 8.3) ;
**caractérisé en ce qu'**il présente les caractéristiques suivantes :
1.6 avec au moins une autre ouverture de passage (13 ; 13.2 ; 13.3) dans la partie extérieure dans le sens radial (14 ; 14.2 ; 14.3) de la deuxième enveloppe (10 ; 10.2 ; 10.3), la ou les ouvertures de passage (8 ; 8.2 ; 8.3) dans la première enveloppe (5 ; 5.2 ; 5.3) et la ou les ouvertures de passage (13 ; 13.2, 13.3) de la deuxième enveloppe (10 ; 10.2 ; 10.3) étant disposées de façon décalée les unes par rapport aux autres dans le sens de la circonférence.

2. Accouplement hydrodynamique (1 ; 1.2 ; 1.3) selon la revendication 1, **caractérisé en ce que** la ou les ouvertures de passage (8 ; 8.2 ; 8.3) de la première enveloppe (5 ; 5.2 ; 5.3) et la ou les ouvertures de passage (13 ; 13.2 ; 13.3) de la deuxième enveloppe (10 ; 10.2 ; 10.3) sont disposées de façon décalée les unes par rapport aux autres dans le sens de la circonférence d'un angle de 180°.

3. Accouplement hydrodynamique (1) selon l'une des revendications 1 ou 2, **caractérisé en ce que** le deuxième espace intermédiaire (11) est disposé à côté du premier espace intermédiaire (6) dans le sens axial.

4. Accouplement hydrodynamique (1) selon la revendication 3, **caractérisé en ce que** le deuxième espace intermédiaire (11) présente dans le sens radial une étendue égale ou inférieure à l'étendue radiale du premier espace intermédiaire (6).

5. Accouplement hydrodynamique (1) selon l'une des revendications 3 ou 4, **caractérisé en ce que** la ou les ouvertures de passage (8) dans la première enveloppe (5) et la ou les ouvertures de passage (13) dans la deuxième enveloppe (10) sont disposées par rapport à l'axe de rotation R sur des rayons ou des diamètres ayant les mêmes dimensions.

6. Accouplement hydrodynamique (1.2) selon l'une des revendications 1 ou 2, **caractérisé en ce que** le deuxième espace intermédiaire (10.2) entoure le premier espace intermédiaire (6.2) dans le sens radial.

7. Accouplement hydrodynamique (1.2) selon la revendication 6, **caractérisé en ce que** l'étendue du deuxième espace intermédiaire (11.2) dans le sens axial est égale ou inférieure à l'étendue axiale du premier espace intermédiaire (6.2).

8. Accouplement hydrodynamique (1.2) selon l'une des revendications 6 ou 7, **caractérisé en ce que** la ou les ouvertures de passage (13.2) dans la deuxième enveloppe (10.2) sont disposées sur un plus grand diamètre que la ou les ouvertures de passage (8.2) de la première enveloppe (5.2).

9. Accouplement hydrodynamique (1.3) selon l'une des revendications 1 ou 2, **caractérisé en ce que** le deuxième espace intermédiaire (11.3) entoure au moins partiellement le premier espace intermédiaire (6.3) aussi bien dans le sens axial que dans le sens radial et la ou les ouvertures de passage (13.3) dans la deuxième enveloppe (10.3) se trouvent sur un diamètre dont les dimensions sont égales ou supérieures à celles de la disposition de l'ouverture ou des ouvertures de passage (8.3) dans la première enveloppe (5.3).

10. Accouplement hydrodynamique selon l'une des revendications 1 à 9, **caractérisé en ce que** la ou les ouvertures de passage (8 ; 8.2 ; 8.3) dans la première enveloppe (5 ; 5.2 ; 5.3) et la ou les ouvertures de passage (13 ; 13.2 ; 13.3) de la deuxième enveloppe (10 ; 10.2 ; 10.3) sont disposées de façon décalée les unes par rapport aux autres dans le sens de la circonférence d'un angle compris entre 90° et 270°.
